(19) **Europäisches Patentamt**

**European Patent Office**

**Office européen des brevets**

(11) **EP 0 478 008 B1**

(12) **FASCICULE DE BREVET EUROPEEN**

(45) Date de publication et mention
de la délivrance du brevet:
**25.10.2000 Bulletin 2000/43**

(51) Int. Cl.⁷: **H04L 12/56**

(21) Numéro de dépôt: **91120628.2**

(22) Date de dépôt: **19.12.1990**

(54) **Méthode et système de contrôle de débits de communications temporelles asynchrones**

Verfahren und System zur Überwachung der Datenraten von asynchronen Zeitmultiplex-Übertragungen

Method and system for monitoring the data rates of asynchronous time division communications

(84) Etats contractants désignés:
**DE GB IT SE**

(30) Priorité: **19.01.1990 FR 9000770**

(43) Date de publication de la demande:
**01.04.1992 Bulletin 1992/14**

(62) Numéro(s) de document de la (des) demande(s)
initiale(s) en application de l'article 76 CBE:
**90460052.5 / 0 438 009**

(73) Titulaires:
• **Boyer, Pierre**
**F-22300 Lannion (FR)**
• **Rouaud, Yvon**
**F-22300 Lannion (FR)**
• **Servel, Michel**
**F-22300 Lannion (FR)**

(72) Inventeurs:
• **Boyer, Pierre**
**F-22300 Lannion (FR)**
• **Rouaud, Yvon**
**F-22300 Lannion (FR)**
• **Servel, Michel**
**F-22300 Lannion (FR)**

(74) Mandataire: **Maillet, Alain et al**
**Cabinet Le Guen & Maillet,**
**38, rue Levavasseur,**
**B.P. 91**
**35802 Dinard Cedex (FR)**

(56) Documents cités:
**EP-A- 0 293 315        EP-A- 0 355 243**
**US-A- 4 475 192**

• **REVUE HF. vol. 14, no. 5 /6, Novembre 1989,
OPHAIN BE pages 155 - 164; J.BOUWENS ET
AL.: 'Architecture of the local exchange in the
Belgian broadband experiment'**

**Description**

La présente invention concerne une méthode et un système de contrôle de débits de communications temporelles asynchrones par circuits virtuels.

On connaît déjà des systèmes de contrôle des flux de paquets ou de cellules portés par des multiplex temporels asynchrones. L'acheminement de débits quelconques et le partage des mêmes ressources de transmission constituent l'intérêt de la technique temporelle asynchrone. On rappelle qu'un multiplex temporel asynchrone a la structure de celui qui est décrit dans le document EP-A-108 028. Dans un tel multiplex, les données sont transmises par paquets de même longueur chacun précédé d'une étiquette de longueur fixe identifiant le circuit virtuel auquel le paquet appartient. Dans la suite, pour se conformer à la désignation maintenant usuelle, on désignera par "cellule" l'étiquette suivie du paquet. Le multiplexage temporel asynchrone permet notamment de transmettre sur un même support, c'est-à-dire le multiplex temporel asynchrone, des cellules appartenant à des circuits virtuels différents. Le nombre maximal de circuits virtuels sur un multiplex est déterminé par la longueur en bits de la partie de l'étiquette qui identifie chaque circuit virtuel.

L'allocation des multiplex temporels s'appuie généralement sur des statistiques des taux d'activité des différentes sources pouvant y avoir accès si bien qu'il a un risque non nul de pertes d'informations par débordement des files d'attente dû à des surcharges instantanées. Il faut évidemment minimiser ces pertes, mais la solution n'est pas facile car les flux délivrés par les différentes sources sont de caractère discontinu et sont sporadiques. De plus, des terminaux malveillants sont susceptibles d'injecter dans le réseau des cellules à un débit supérieur à celui qui leur a été attribué lors de l'établissement de leur communication.

Les documents EP-A-293 314 et EP-A-293 315 décrivent déjà chacun des méthodes et des systèmes de contrôle de flux de paquets, particulièrement ceux qui sont portés par des multiplex temporels asynchrones. Les documents US-A-4 475 192 et US-A-4 6111 322 traitent également les contrôles de trafics. A ce sujet, on peut aussi se reporter à l'article intitulé "The Challenge of Multipoint Communication" par Jonathan S. Turner, 5th ITC Seminar, Lake Como, mai 1987, chapitre 5 - Congestion Control. Ce document définit notamment le dispositif connu sous la dénomination anglaise "leaky bucket". D'une manière générale dans ces contrôles de flux, on élimine les cellules en trop lorsque le nombre de cellules reçues dépasse la quantité prévue lors de l'établissement de la communication, ce nombre étant évalué sur un temps correspondant à la dispersion de temps de propagation maximale admissible. Cette dispersion de temps de propagation est couramment évaluée pour un taux de perte associé très faible, de l'ordre de $10^{-10}$.

Ces méthodes, systèmes et dispositifs connus satisfont bien aux conditions d'écrêtage de débit, mais s'il se présente une rafale de cellules consécutives ou presque consécutives appartenant à un même circuit virtuel, même si le nombre de cellules n'excède pas dans la rafale le nombre autorisé pendant l'intervalle de mesure considéré, la rafale risque de créer une surcharge instantanée dans la partie aval du réseau de commutation temporel. En effet, la durée des rafales assimilables par le réseau est nettement inférieure à l'amplitude de la dispersion de temps de propagation attendue. Il faut noter que ces rafales ou "grumeaux" de cellules peuvent être produites, non seulement, par les sources, mais encore par le multiplexage amont de flux temporels asynchrones.

Un objet de la présente invention consiste à prévoir une méthode et un moyen de mise en oeuvre qui, réalise un contrôle du trafic en éliminant les cellules en trop.

La présente demande est une division de la demande de brevet européen n° 90460052.5 (publiée sous le n° EP-A-0438009).

Suivant une caractéristique de l'invention, il est prévu une méthode de contrôle de flux de communications temporelles asynchrones formées de cellules portées par un multiplex temporel entrant pour délivrer un multiplex temporel asynchrone sortant, chaque cellule entrante étant rangée dans une mémoire tampon à une adresse correspondant à son heure réelle de réémission sur le multiplex temporel sortant, caractérisée en ce que qu'elle consiste à comparer le nombre de cellules d'une même communication qui sont mémorisées dans la mémoire tampon et qui n'ont pas été encore émises à l'heure d'arrivée d'une cellule entrante appartenant à ladite communication à un nombre maximal attribué à la communication et, dans le cas où le premier nombre dépasse le second, à ne pas prévoir de réémettre ladite cellule entrante.

Suivant une autre caractéristique, les moyens de mise en oeuvre comprennent, outre la mémoire tampon, une mémoire d'état et une unité arithmétique et logique, la mémoire d'état étant divisée en zones, chaque zone correspondant biunivoquement à une communication transmise par le multiplex temporel asynchrone entrant et comprenant deux sections, une première section dans laquelle est mémorisée le nombre de cellules de la communication qui sont mémorisées dans la mémoire tampon et qui n'ont pas été encore émises à l'heure d'arrivée de la cellule entrante de la même communication, et une seconde section dans laquelle est mémorisé le nombre maximal attribué à la communication, l'unité arithmétique et logique effectuant la comparaison entre le premier nombre et le second nombre, et inhibant la réémission de la cellule entrante, quand le premier nombre dépasse le second.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est un schéma-bloc d'un système suivant l'invention,

la Fig. 2 montre des structures de mots correspondants à des heures ou à des intervalles de temps utilisés dans le système de la Fig. 1,

la Fig. 3 est un bloc-diagramme d'une unité arithmétique et logique utilisée dans le système de la Fig. 1,

la Fig. 4 est un schéma de la partie arithmétique de l'unité de la Fig. 3,

la Fig. 5 montre des organigrammes temporels illustrant un cas de fonctionnement du système de l'invention,

la Fig. 6 montre aussi des organigrammes temporels illustrant un autre cas de fonctionnement, et

les Figs. 7 à 9 montrent les tables des décisions logiques prises dans la partie logique de l'unité de la Fig. 1.

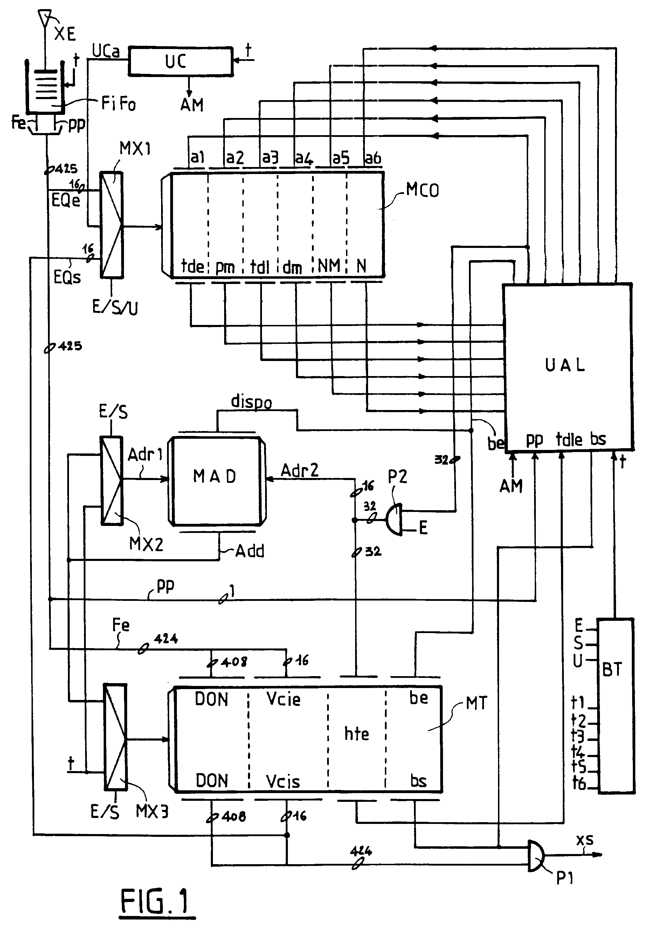

Le système de la Fig. 1 comprend une file d'attente d'entrée FiFo, une mémoire d'état MCO, associée à une unité arithmétique et logique UAL et à un multiplexeur d'adressage MX1, une mémoire d'adresses disponibles MAD associée à un multiplexeur d'adressage MX2, une mémoire tampon MT associée à un multiplexeur d'adressage MX3, des portes ET P1 et P2, une base de temps BT et une unité de commande à microprocesseur UC.

A l'entrée de la mémoire d'attente FiFo est appliqué le multiplex entrant XE. Les portes P1 délivrent le multiplex sortant XS.

Dans l'exemple de réalisation décrit, le multiplex XE est un multiplex temporel asynchrone du type de celui qui est décrit dans le document EP-A-108 028, mais dont les paquets, maintenant appelés "cellules", sont supposés avoir été mis sous forme parallèle à 424 bits. Cette taille de 424 bits correspond à celle d'une cellule qui a été adoptée en juin 1989 par le CCITT. La mémoire FiFo est une file d'alignement, semblable à celle qui est décrite dans le document EP-A-113 307, dont le rôle est d'adapter le débit entrant sur l'horloge locale $t$ du système de la Fig. 1. Chaque cellule sortant de la file FiFo est donc synchrone de l'horloge locale et est présentée sur un faisceau Fe de 424 fils, dont les seize premiers EQe transmettent les seize premiers bits qui constituent l'étiquette Vcie qui identifie le circuit virtuel qui achemine la cellule, c'est-à-dire qui identifie la communication concernée. La file FiFo a encore une sortie PP qui porte un signal du même nom qui indique si l'intervalle de temps entrant est libre ou occupé. Le signal PP est obtenu comme montré à la Fig. 1 du document EP-A-113 307. Il en résulte un faisceau de 425 fils sortant de la mémoire FiFo, le 425$^e$ fil portant le signal PP et étant relié à l'entrée du même nom du circuit UAL.

La mémoire d'états MCO est une mémoire vive à accès aléatoire comportant autant de zones que de communications que peut traiter le système. Chaque zone est divisée en six sections respectivement destinées à mémoriser:

- l'heure d'émission théorique de la dernière cellule arrivée $\underline{tde}$,
- la période minimale théorique $\underline{pm}$,
- l'heure d'émission théorique de la dernière cellule émise $\underline{tdl}$,
- le délai maximum $\underline{dm}$,
- le nombre NM, et
- le nombre N.

La mémoire MCO a six entrées a1 à a6, correspondant respectivement aux six sections mentionnées ci-dessus. Elle comporte également six sorties portant respectivement les mêmes désignations que les sections. Enfin, son entrée d'adressage est reliée à la sortie du multiplexeur à trois entrées MX1.

La première entrée du multiplexeur MX1 est reliée au faisceau EQe portant l'étiquette Vcie de la cellule entrante, sa seconde entrée est reliée au faisceau EQs portant l'étiquette vcis de la cellule sortante, et sa troisième entrée UCa est reliée à une sortie correspondante de l'unité de commande UC. L'entrée de commande du multiplexeur MX1 est reliée aux sorties E, S et U de la base de temps BT.

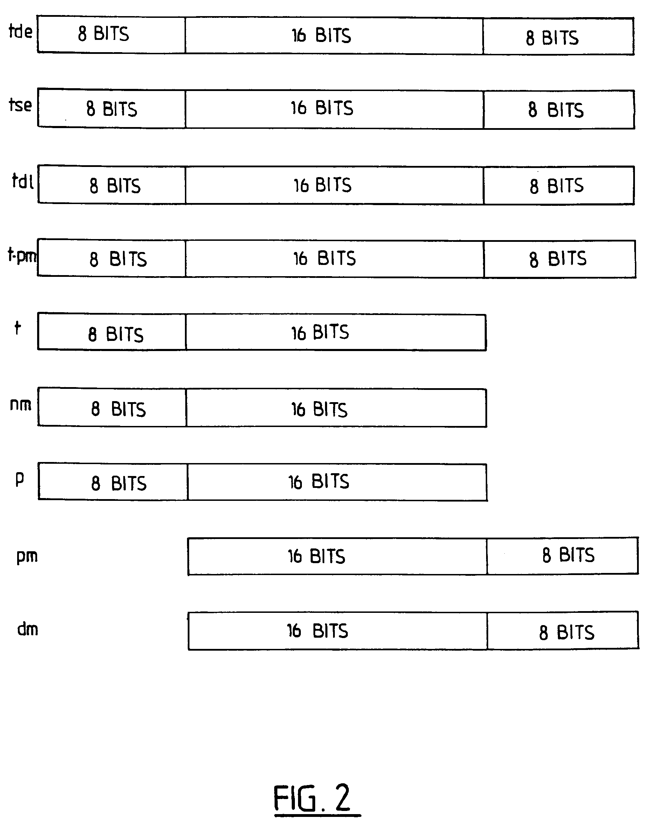

La base de temps BT délivre l'heure locale $t$ dont chaque temps élémentaire correspond à la réception d'une cellule entrante et à l'émission d'une cellule sortante. Comme le montre la Fig. 2, l'heure $t$, servant à suivre la chronologie des événements, est donnée sur vingt-quatre bits dont une première partie de poids forts composée de huit bits et suivie d'une seconde partie de poids plus faible de seize bits. Comme on le verra plus tard, la première partie permet de repérer les événements à long terme et la seconde sert a l'adressage de la mémoire MT et donc à repérer les événements dans chaque cycle de fonctionnement de la mémoire MT.

L'heure $\underline{tde}$ définie plus haut est donnée sur trente-deux bits dont une première partie de huit bits et une seconde de seize bits, comme pour $t$, plus une troisième partie de huit bits de poids faibles constituant une partie décimale dont on verra le rôle plus tard. En fonctionnement normal, l'heure $\underline{tse}$ se déduit de l'heure théorique d'émission de la cellule précédente de la même communication en y ajoutant la valeur $\underline{pm}$ qui représente la période minimale théorique de réémission des cellules de la communication concernée. L'heure $\underline{tde}$ est dite théorique car l'heure réelle d'émission de la cellule concernée pourra en différer, étant donné les conflits possibles entre les temps d'émission théoriques de cellules appartenant à des communications différentes.

La période $\underline{pm}$ est donnée sur vingt-quatre bits dont la partie de seize bits servant indirectement a l'adressage de la mémoire MT et la partie décimale de huit bits. La période pm correspond au temps minimum qui doit théoriquement séparer les temps de réémission de deux cellules consécutives pour éviter l'effet de "grumeaux" et, par conséquent, lisser le débit des cellules. La partie décimale permet de sélectionner un débit quelconque qui n'est pas nécessairement un sous-multiple du débit du multiplex sortant XS.

L'heure d'émission théorique de la dernière cellule émise tdl est codée sur trente-deux bits, comme tde, correspond à l'heure théorique à laquelle la dernière cellule de la communication concernée aurait dû être émise, même si son heure réelle d'émission a été un peu plus tardive.

Le délai maximum dm est codé sur vingt-quatre bits, comme pm, et correspond au temps de retard maximum admissible que peut prendre une cellule dans le réseau, compte tenu de la dispersion de temps de propagation admise qui a été mentionnée dans le préambule. Pour tenir compte de cette dispersion, on accepte de lisser les débits jusqu'à cette valeur de temps dm. Si, par suite de rafales de cellules consécutives dans la même communication on ne peut garantir ce délai, la cellule concernée est détruite. Le délai dm peut varier en fonction d'éventuelles priorités entre des cellules de communications différentes.

La base de temps BT délivre, en plus de l'heure locale t et pour chaque temps élémentaire, six signaux successifs t1 à t6 qui occupent ensemble un temps élémentaire. Les temps t1 et t2 sont utilisés pour le traitement correspondant à l'arrivée d'une cellule entrante, les temps t3 et t4 pour le traitement correspondant à l'émission d'une cellule sortante, et les temps t5 et t6 pour le traitement de l'accès à la mémoire MCO par l'unité de commande UC. De plus, les sorties t1 et t2 sont réunies pour délivrer le signal E, les sorties t3 et t4 pour donner le signal S et les sorties t5 et t6 pour donner le signal U. Les signaux E, S et U servent notamment à commander les multiplexeurs MX1 à MX3.

La lecture des mémoires s'effectue en t1, t3 et t5 tandis que la réécriture, après calculs, s'effectue en t2, t4 et t6.

La mémoire tampon MT est une mémoire vive à accès aléatoire comportant des cases dont le nombre sera défini dans la suite. Chaque case est divisée en quatre sections respectivement destinées à mémoriser:

- le champ des données DON utiles d'une cellule,
- l'étiquette Vcie de la cellule correspondante,
- l'heure théorique tde d'émission de cette cellule, et
- un bit bs qui, quand il est à "1", indique que la case adressée en lecture contient une cellule utile à transmettre.

La mémoire MT a quatre entrées correspondant respectivement aux données DON, à l'étiquette Vcie, à l'heure théorique d'émission hte et au bit be. Elle comprend également quatre sorties portant respectivement les références DON, vcis, tdse et bes. Les sorties DON et Vcis sont regroupées dans un faisceau de 424 fils reliés respectivement aux premières entrées de 424 portes ET P1 dont les secondes entrées sont reliées à la sortie bes. L'entrée d'adressage de la mémoire MT est reliée à la sortie du multiplexeur MX3.

La première entrée du multiplexeur MX3 est reliée à la sortie de la mémoire MAD et sa seconde entrée reçoit l'heure courante t de la base de temps BT. Son entrée de commande est reliée aux sortie E et S de la base de temps BT.

La mémoire MAD est une mémoire vive à accès aléatoire comportant autant de cases que la mémoire MT, chaque case ayant une capacité de un bit et correspondant biunivoquement à une case de la mémoire MT. Elle a une entrée dispo qui est mise à "1" ou à "0" selon que la mémoire MT est en mode d'écriture ou de lecture. Elle a une sortie Add. Elle comprend deux entrées d'adressage Adr1 et Adr2. L'entrée Adr1 est reliée à la sortie du multiplexeur MX2 dont une entrée est reliée à la sortie Add de la mémoire MAD et dont la seconde entrée reçoit l'heure locale t de la base de temps BT. L'entrée de commande du multiplexeur MX2 a son entrée de commande reliée aux sorties E et S de la base de temps BT. L'entrée d'adressage Adr2 est reliée à la sortie de la porte P2.

La sortie Add de la mémoire MAD est reliée à la première entrée du multiplexeur MX3.

Dans la mémoire MAD, une case contient un "0" pour indiquer qu'elle est libre et un "1" pour indiquer qu'elle est occupée. La mémoire MAD fournit en permanence à sa sortie Add l'adresse d'une case libre, cette adresse étant sélectionnée prioritairement à partir de la valeur binaire d'un champ de seize bits extraits de l'heure d'émission théorique hte de la cellule considérée, c'est-à-dire du signal a1, que l'on décrira plus tard, et qui est appliqué à la première entrée des portes P2. Les secondes entrées de ces portes P2 sont reliées à la sortie E de la base de temps BT, ce qui signifie que l'entrée Adr2 de la mémoire MAD n'est active que pendant le traitement d'une cellule entrante et, précisément, pour trouver une adresse Add de case libre dans la mémoire MT. Une mémoire telle la mémoire MAD est décrite dans le document FR-A-2 617 602 intitulé "Circuit pour mémoriser des états de disponibilité de ressources logiques, telles que cellules de mémoire, et établir des adresses de ressources libres". En pratique, la mémoire MAD comprend des moyens pour explorer la case qui est désignée par hte et, quand cette case n'est pas libre, les cases suivantes, et arrêter l'exploration à la première cellule libre, dont l'adresse est alors délivrée par Add.

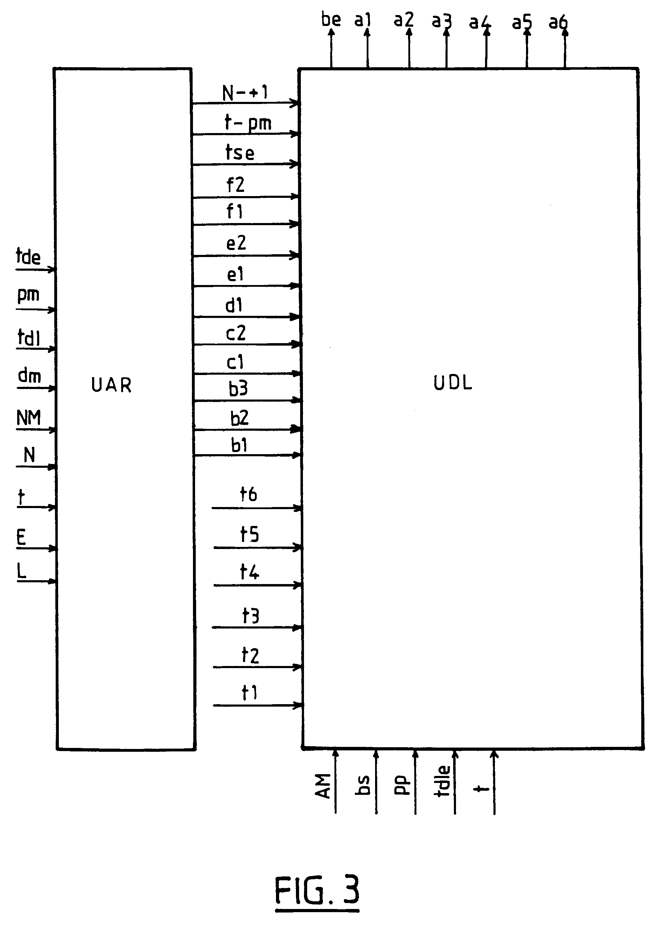

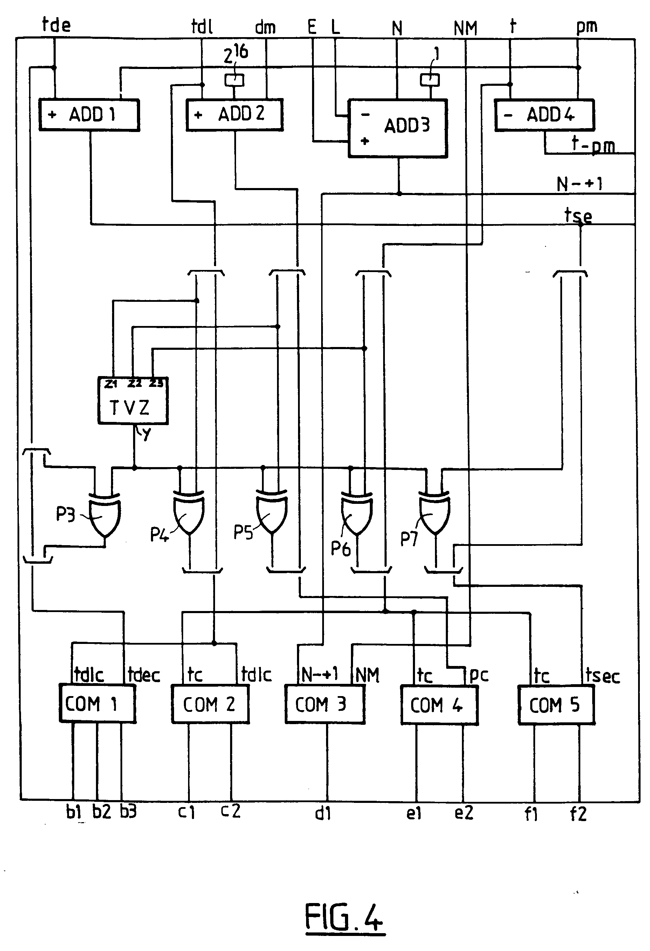

L'unité arithmétique et logique UAL associée à la mémoire MCO est représentée dans le bloc-diagramme de la Fig. 3. Il comprend une partie arithmétique UAR et une partie de décisions logiques UDL. La partie UAR, Fig. 4, comprend quatre additionneurs ADD1 à ADD4, un circuit de test de voisinage à zéro TVZ, cinq portes OU-exclusif P3 à P7 et cinq comparateurs COM1 à COM5.

Le circuit UAR comporte les entrées $\underline{tde}$, $\underline{tdl}$, $\underline{dm}$, $\underline{E}$, $\underline{L}$, $\underline{N}$, NM, $\underline{t}$ et $\underline{pm}$. Il comporte également les sorties $\underline{t\text{-}pm}$, $\underline{N\text{-}+1}$, $\underline{tse}$, $\underline{b1}$, $\underline{b2}$, $\underline{b3}$, $\underline{c1}$, $\underline{c2}$, $\underline{d1}$, $\underline{e1}$, $\underline{e2}$, $\underline{f1}$ et $\underline{f2}$.

Le circuit ADD1 est un additionneur arithmétique qui a ses deux entrées reliées respectivement aux entrées $\underline{tde}$ et $\underline{pm}$, et sa sortie à la sortie $\underline{tse}$ qui délivre l'heure (tde+pm).

Le circuit ADD2 est un additionneur arithmétique qui a trois entrées dont l'une est reliée à l'entrée $\underline{tdl}$, la seconde à l'entrée $\underline{dm}$ et la troisième reçoit en permanence la valeur CMT qui correspond au nombre de cases dans la mémoire MT. A titre d'exemple, cette valeur peut être de $2^{16}$, soit 65 536. L'exposant 16 correspond aux seize bits de la seconde partie de $\underline{t}$, Fig. 2. Les huit bits de poids fort de $\underline{t}$ permettent de ne pas avoir de valeur zéro à chaque cycle de la mémoire tampon MT, mais un passage par zéro uniquement tous les $2^{24}$ temps élémentaires de la base de temps BT, ce qui correspond à une période T de celle-ci.

La sortie P de l'additionneur ADD2, qui délivre la valeur $(td1+dm+2^{16})$, est reliée, indirectement par la porte P5 pour son bit de poids fort, à la seconde entrée Pc du comparateur COM4.

Le circuit ADD3 est un additionneur algébrique qui a deux entrées de commande respectivement reliées aux entrées $\underline{E}$ et $\underline{L}$, et deux entrées dont l'une est reliée à l'entrée $\underline{N}$ et l'autre reçoit en permanence la valeur "1". Ainsi, quand l'entrée $\underline{E}$ est activée, le circuit ADD3 ajoute "1" à la valeur N tandis que quand l'entrée $\underline{L}$ est activée, il soustrait "1" de la valeur N. Ainsi, la sortie du circuit ADD3 délivre soit (N+1), soit (N-1), et est reliée à la sortie $\underline{N\text{-}+1}$ et à la première entrée du comparateur COM3.

Le circuit ADD4 est un soustracteur arithmétique qui a ses deux entrées reliées respectivement aux entrées $\underline{t}$ et $\underline{pm}$. Sa sortie délivre la valeur (t-pm) et est reliée à la sortie $\underline{t\text{-}pm}$.

Le circuit TVZ a trois entrées z1 à z3 et une sortie Y. Les entrées z1 à z3 sont respectivement reliées aux fils de bit de poids fort de l'entrée $\underline{tdl}$, de la sortie P de l'additionneur ADD2 et de l'entrée $\underline{t}$, ces fils étant également respectivement reliés aux premières entrées des portes P4 à P6. La sortie Y est à "1" quand, parmi les trois bits de poids forts appliqués à ses entrées, la valeur binaire de l'un d'entre eux diffère de celles des deux autres. La sortie Y est reliée aux secondes entrées des portes P4 à P6. Par ailleurs, le fil de bit de poids fort de l'entrée $\underline{tde}$ est relié à la première entrée de la porte P3 dont la seconde entrée est reliée à la sortie Y du circuit TVZ. Enfin, le fil de bit de poids fort de la sortie $\underline{tse}$ est relié à la première entrée de la porte P7 dont la seconde entrée est aussi reliée à la sortie Y.

Dans le cas où Y = 0, le bit de poids fort de chacune des valeurs $\underline{tde}$, $\underline{tse}$, $\underline{tdl}$, $P$ et $\underline{t}$ n'est pas altéré en passant dans sa porte OU-exclusif associée. Dans le cas où Y = 1, le bit de poids fort change de valeur à la sortie des portes P3 à P7, ce qui conduit, une fois qu'il a été associé au reste des bits de poids faible, à avoir toutes les valeurs dans une zone ne comprenant pas la valeur zéro d'un cycle complet de la base de temps BT et donc de pouvoir les comparer, sans ambiguïté, dans les comparateurs COM1, COM2, COM4 et COM5, autour de la valeur T/2.

Le comparateur COM1 a ses deux entrées td1c et tdec respectivement reliées aux sorties des portes P4 et P3. Sa sortie $\underline{b1}$ est activée quand $\underline{tdec}$ est supérieur $\underline{tdlc}$, la sortie $\underline{b2}$ est activée quand $\underline{tdle}$ est égal à $\underline{tdlc}$, et la sortie $\underline{b3}$ est activée quand $\underline{tdec}$ est inférieur à $\underline{tdlc}$.

Le comparateur COM2 a une entrée tc reliée à la sortie de la porte P6 et une entrée td1c reliée à la sortie de la porte P4. Sa sortie $\underline{c1}$ est activée quand $\underline{tc}$ est inférieur à $\underline{tdlc}$ et sa sortie $\underline{c2}$ quand $\underline{tc}$ est égal ou supérieur à $\underline{tdlc}$.

Le comparateur COM3 a sa première entrée qui reçoit $\underline{N\text{-}+1}$ et sa seconde entrée reliée à l'entrée $\underline{NM}$. Sa sortie $\underline{d1}$ est activée quand $\underline{N\text{-}+1}$ est supérieur $\underline{NM}$.

Le comparateur COM4 a une entrée tc reliée à la sortie de la porte P6 pour le bit de poids fort et à l'entrée $\underline{t}$ pour les bits de poids faible et une entrée Pc reliée à la sortie de la porte P5 pour le bit de poids fort et la sortie $\underline{P}$ pour les reste des bits de poids faible. Sa sortie $\underline{e1}$ est activée quand $\underline{tc}$ est supérieur $\underline{Pc}$ et sa sortie $\underline{e2}$ est activée quand $\underline{tc}$ est égal ou inférieur à $\underline{Pc}$.

Le comparateur COM5 a une entrée $\underline{tc}$ reliée en parallèle sur l'entrée tc du comparateur COM4 et une entrée tsec reliée à la sortie de la porte P7 pour le fil de poids fort et à la sortie de l'additionneur ADD1 pour le reste des bits de poids faible. Sa sortie $\underline{f1}$ est activée quand $\underline{tc}$ est inférieur à $\underline{tsec}$ ce qui est un cas normal d'un premier type tandis que sa sortie $\underline{f2}$ est activée quand $\underline{tc}$ est supérieur à $\underline{tsec}$ ce qui est un cas normal d'un second type.

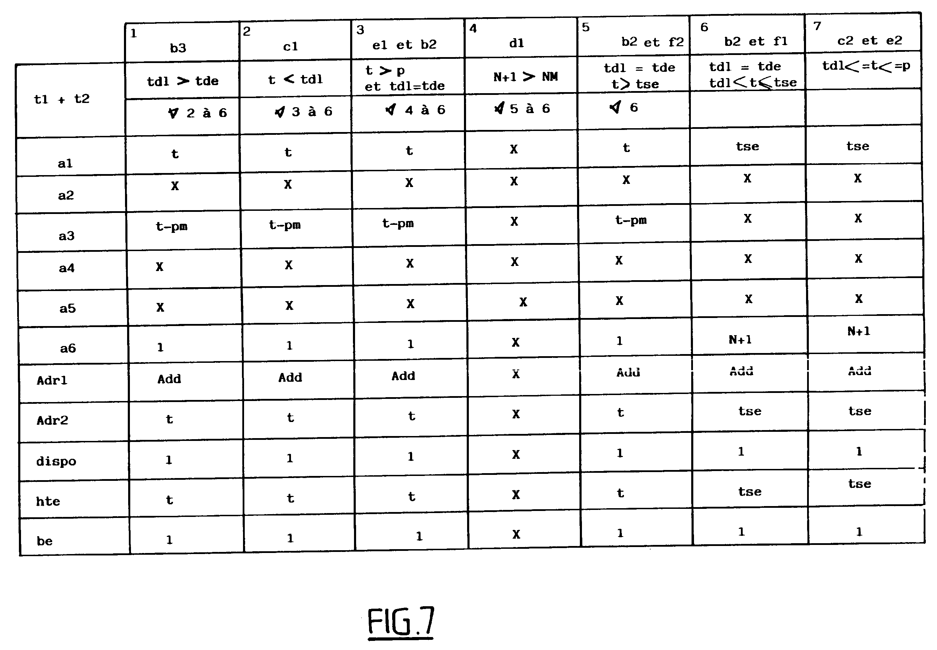

Le signal de sortie $\underline{tse}$ produit par l'additionneur ADD1 correspond à une heure qui est la somme de l'heure théorique d'émission de la cellule précédente $\underline{tde}$ et de la période minimum $\underline{pm}$. La Fig. 2 montre que l'heure $\underline{tse}$ (tde+pm) est, comme $\underline{tde}$, codée sur trente-deux bits dont une partie décimale. Le signal $\underline{t\text{-}pm}$ produit par le soustracteur ADD4 correspond à une heure qui précède le temps courant $\underline{t}$ d'une valeur égale à la période minimale $\underline{pm}$. L'heure $\underline{t\text{-}pm}$ est aussi codée sur trente-deux bits dont une partie décimale. Elle est utilisée dans le cas de réinitialisation, comme on le verra dans la suite en relation avec la Fig. 7. Les signaux $\underline{NM}$ et $\underline{N\text{-}+1}$ sont codés sur vingt-quatre bits, sans partie décimale. Le signal NM correspond à un nombre qui représente, pour une communication, le nombre maximum de cellules en attente dans la mémoire MT. Le signal $\underline{N\text{-}+1}$ est également un nombre qui est comparé au nombre NM dans le comparateur COM3. Le signal P, produit par l'additionneur ADD2, correspond à une heure qui est la somme de l'heure tdl, c'est-à-dire l'heure d'émission théorique de la dernière cellule émise, plus le délai maximum dm entre deux cellules, plus le nombre de cases de la mémoire MT. Il est donc certain qu'à l'heure P, toutes les cellules en attente dans la mémoire MT ont été émises, d'où l'intérêt de la comparaison du temps courant t avec le temps P, comme on le verra plus loin.

Le signal b1 du comparateur COM1 est à "1" quand tdec est supérieur à tdlc, ce qui exprime que, à l'arrivée de la cellule faisant partie d'une correspondance, l'heure théorique d'émission de la cellule qui est arrivée juste avant est plus tardive que l'heure théorique à laquelle la dernière cellule de la même communication a été émise. Il s'agit d'un cas normal. Le signal b2 à "1" correspond aussi à un cas normal, celui où les deux heures théoriques sont égales. Par contre, le signal b3 à "1" exprime un cas de faute. Il n'est pas possible que l'heure théorique d'émission d'une cellule appartenant à une conversation précède l'heure théorique d'une cellule de la même conversation déjà émise.

Le signal c1 produit par le comparateur COM2 à "1" exprime que tc est inférieur à tdlc. Il s'agit d'un cas de faute, étant donné que tdlc correspond, au temps tc, à une cellule déjà émise. Le signal de sortie c2 à "1" correspond à un cas normal.

Le signal de sortie d1 du comparateur COM3 à "1" correspond au cas où la mémoire accepterait un nombre de cellules d'un conversation supérieure à ce qui a été convenu au début de la conversation, le nombre convenu étant NM. C'est donc aussi un cas de faute.

Le signal de sortie el du comparateur COM4 à "1" exprime que tc est supérieur à Pc. Le signal e2 à "1" correspond à un cas normal.

Le signal de sortie f1 du comparateur COM5 à "1" exprime que tc est inférieur ou égal à tsec ce qui correspond à un cas normal d'un premier type, comme on le verra dans la suite. Le signal de sortie f2 à "1" exprime que tc est supérieur à tsec, ce qui correspond à un cas normal d'un second type.

Les signaux f1 et f2 du comparateur COM5 correspondent à deux types de cas normaux comme on le verra plus tard.

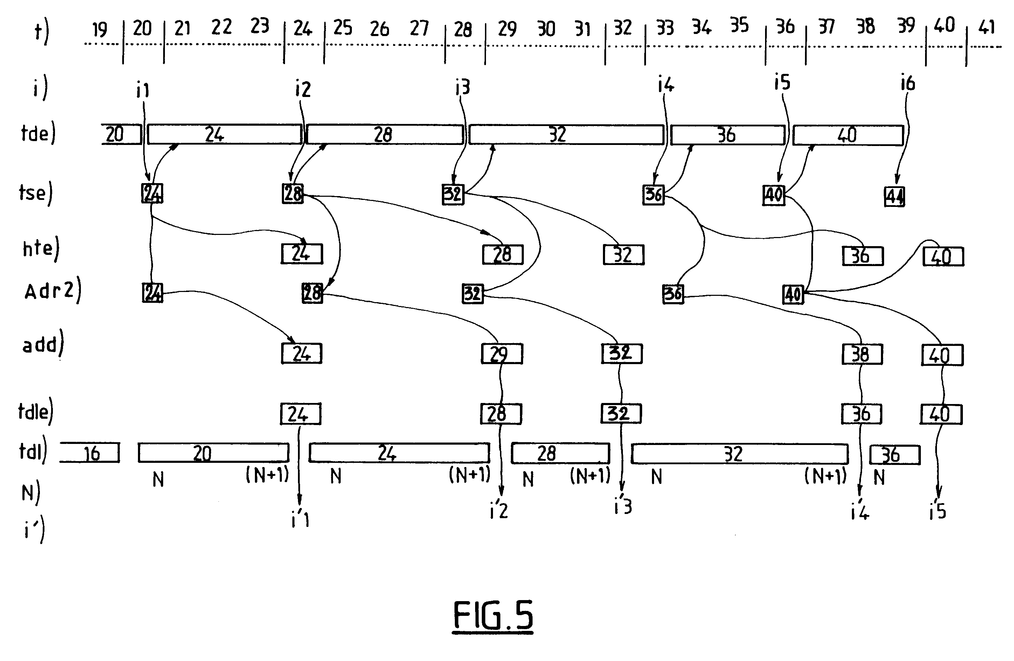

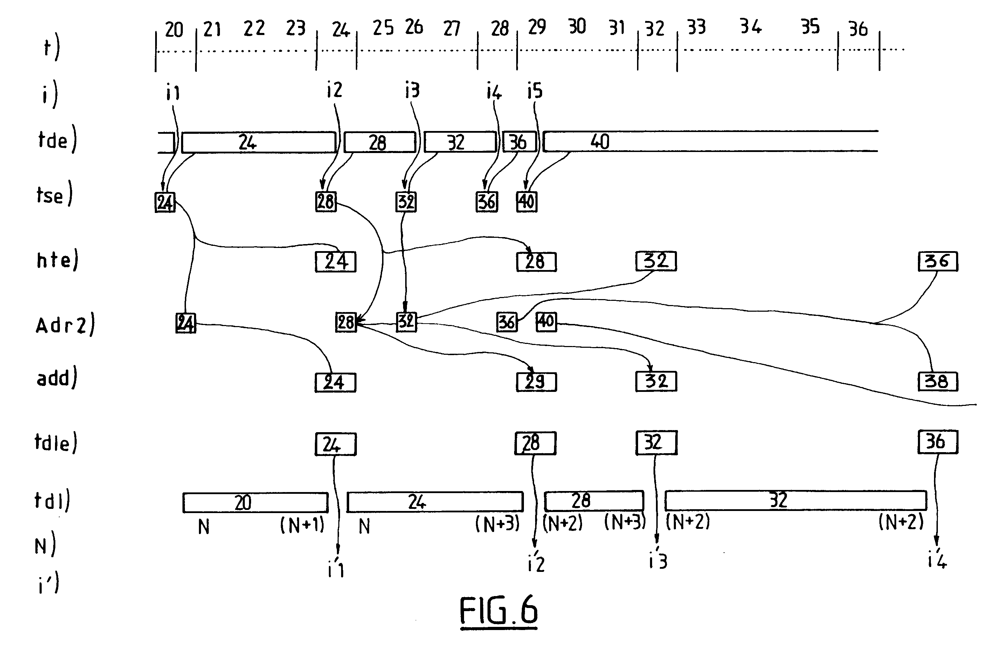

Avant de considérer en détail comment le circuit de décisions logiques UDL traite les différents cas en fonction des signaux b1 à e2 qui lui sont appliqués, on va illustrer en relation avec les Figs. 5 et 6 deux cas de fonctionnements courants et normaux, la valeur de pm étant de quatre temps élémentaires.

Dans les diagrammes temporels de la Fig. 5:

- la ligne t) montre partiellement le déroulement de l'heure locale t, soit ici les temps élémentaires t19 à t41,
- la ligne i) indique les cellules entrantes de la conversation i, soit ici i1 à i6, étant supposé qu'il ne s'agit pas d'un début de conversation,
- la ligne tde) montre les différentes valeurs tde inscrites successivement dans la zone correspondant à la conversation i de la mémoire MCO,
- la ligne tse) indique les différentes valeurs de tse à la sortie correspondante du circuit UAR,
- la ligne hte) indique les valeurs successives de hte,
- la ligne Adr2) indique les différents adresses initiales appliquées à la mémoire MAD pour qu'elle cherche l'adresse d'une case suivante disponible dans la mémoire MT,
- la ligne add) indique les adresses de la mémoire MT successivement déterminées par la mémoire MAD, en notant que chaque valeur hte est aussi enregistrée à la même adresse de MT, bien que cette valeur puisse être différente de cette adresse,
- la ligne tdle) indique les valeurs successives de tdle à chaque lecture de cellule, la valeur de tdle étant appelée à être mémorisée sous forme de tdl dans la zone correspondant à la conversation i dans la mémoire, après traitement dans le circuit de décisions logiques UDL,
- la ligne tdl) indique précisément les valeurs successives de tdl,
- la ligne N) indique les nombres successifs de cellules de la conversation i qui sont dans la mémoire MT, et
- la ligne i') indique les temps de sortie des cellules de la conversation i, soit ici i'1 à i'5, correspondant à i1 à i5.

Dans les diagrammes temporels de la Fig. 6, on a adopté les mêmes conventions.

Dans le cas de la Fig. 5, les cellules i1 à i5 arrivent à l'entrée du système de l'invention en respectant la période pm de quatre temps élémentaires, sauf pour i4 qui arrive avec un temps de retard. La recherche d'une adresse libre dans la mémoire MAD est immédiate, sauf pour la mémorisation de la cellule i2. Donc, les cellules i'1 à i'5 sortent à peu près espacées comme sont arrivées les cellules i1 à i5. On rappelle que la période pm est la période théorique minimum d'espacement entre deux cellules réémises. Dans le cas de la Fig. 5, on a supposé que les cellules entrantes respectaient pratiquement cette même période pm et on constate que normalement les cellules réémises la respectent aussi.

Dans le cas illustré à la Fig. 6, à partir de la cellule i2, la période minimale pm n'est plus respectée, les cellules entrantes i3 à i5 arrivent très rapprochées, alors que la cellule suivante arrive nettement plus tard. Mais on notera que les cellules sortantes i'1 à i'4 sont bien espacées, ce qui confirme que le système de la demande principale effectue un lissage. La Fig. 6 montre également que le nombre N peut augmenter rapidement en cas de rafales. Si la rafale i3 à i5 avait continué, le nombre N aurait pu dépasser un maximum NM, ce qui aurait entraîné l'élimination des dernières cellules de la rafale.

Les deux cas illustrés aux Figs. 5 et 6 ne constituent que des exemples de cas normaux qui permettent d'apprécier le cas de fautes ou d'autres cas normaux qui vont maintenant être décrits en détail en considérant les Figs. 7 à 9.

Comme le montre la Fig. 3, les entrées du circuit de décisions logiques sont: N-+1, t-pm, tse, b1, b2, b3, c1, c2, d1, e1, e2, f1, f2, AM, bs, PP, tdle, t, et t1 à t6. On va maintenant décrire successivement les traitements exécutés à l'arrivée d'une cellule entrante, à l'émission d'une cellule sortante et à l'accès de l'unité centrale.

A l'arrivée d'une cellule entrante, celle-ci est traitée en t1, puis t2, Fig. 7. La zone de la mémoire MCO, qui correspond à la communication i à laquelle appartient la cellule entrante, est adressée, à travers le multiplexeur MX1 commuté par l'entrée E = t1+t2 , par l'étiquette Vcie de la cellule. L'état de ladite zone de la mémoire MCO est lu en t1 et ses signaux de sorties appliqués au circuit UAR qui délivre les signaux b1 à f2.

Les différentes cases indiquées dans le tableau de la Fig. 7 représentent les actions à entreprendre en fonction des événements définis par les signaux b1 à f2 (première ligne), associés aux conditions inscrites à la deuxième ligne. On rencontre donc les cas suivants:

1) b3 est à "1", quels que soient les autres signaux b2 à e2. Normalement, l'heure tde est toujours supérieure ou égale à l'heure tdl puisque tdl correspond à une cellule émise et tde à cette même cellule ou à une cellule suivante. C'est donc un cas de faute. Cependant, suivant le système de l'invention, la décision est prise de prendre en compte la cellule entrante. En t2, les signaux a1 à a6 prennent les valeurs suivantes: t, c'est à dire l'heure courante, x, t-pm, x, x, 1, x indiquant que la valeur existant déjà dans la zone correspondante de MCO est inchangée. On voit notamment qu'à l'heure tdl est attribuée la valeur t-pm pour que tdl soit différente de tde, ce qui est utile pour des cas suivants, et que le nombre N prend la valeur 1 pour indiquer qu'il y a une cellule de la communication i qui a été mémorisée.

De plus, les seize bits du signal a1, correspondant aux seize bits de poids faible de t, sont appliqués, par les portes P2 ouvertes par le signal E, à l'entrée Adr2 de la mémoire MAD qui va chercher l'adresse égale ou supérieure à t d'une case libre dans la mémoire MT. Le faisceau des 32 fils de a1, toujours par les portes P2, est prolongé vers l'entrée hte de la mémoire MT. Le fil be est à "1". La mémoire MT adressée par le multiplexeur MX3 mémorise la cellule entrante, l'heure hte et le bit be dans la case correspondante.

Enfin, la mémoire MAD inscrit le bit "1" présent à l'entrée dispo reliée au fil be dans la case d'adresse Add, l'adressage d'écriture étant transmis par le multiplexeur MX2 commandé par E.

2) c1 est à "1", quels que soient les signaux e1, b2, d1, c2 et e2.

Ce cas ne peut normalement se produire et c'est donc un cas de faute. On décide de prendre la cellule entrante en compte et on prend les mêmes actions qu'en 1) ci-dessus.

3) e1 et b2 sont à "1", quels que soient les signaux d1, b2, c2 et e2.

Ce cas signifie qu'au bout du temps P, qui est la somme de tdl, de dm et d'un cycle de lecture de la mémoire MT, soit $2^{16}$ dans l'exemple décrit, on est certain que toutes les cellules de la communication i en attente dans la mémoire MT ont été lues, si une nouvelle cellule de cette communication ne s'est pas présentée très récemment. On décide de prendre la cellule entrante en compte et les actions sont les mêmes qu'en 1) ci-dessus.

4) d1 est à "1", quels que soient b2, c2 et e2.

En t1, à la lecture de la zone de la mémoire MCO, il apparaît que le nombre N de cellules de la communication i en attente dans la mémoire MT est supérieur à NM, c'est-à-dire supérieur au nombre convenu lors de l'établissement de la communication i. On prend la décision de ne pas écrire la cellule entrante qui se trouve éliminée, les données déjà existantes dans la zone correspondante de la mémoire MCO étant inchangées.

5) b2 et f2 sont à "1", quels que soient c2 et e2.

Ce cas correspond à une absence de cellule à émettre pour la communication i. On prend la cellule entrante en compte et les actions sont les mêmes qu'en 1) ci-dessus.

On notera que ce cas correspond au cas initial après établissement de la communication i.

6) b2 et f1 sont à "1", quels que soient c2 et e2.

C'est un cas normal de fonctionnement du second type. La cellule entrante va être prise en compte, En t2, la valeur de tse va devenir la nouvelle heure tde et, par a1 et les portes P2, va adresser l'entrée Adr2 de la mémoire MAD et la fin des actions va être la même que celle du cas 7) ci-dessous. De plus, la valeur de N va être incrémentée d'une unité.

7) c2 et e2 sont à "1".

C'est un cas normal de fonctionnement de premier type. La cellule entrante va être prise en compte. En t2, la valeur de tse va devenir la nouvelle heure tde et, par a1 et les portes P2, va adresser l'entrée Adr2 de la mémoire MAD. Les contenus de a2 à a5 sont inchangés. La valeur de N va être incrémentée d'une unité et rangée en a6.

Ce septième cas est illustré par les diagrammes des Figs. 5 et 6.

A l'émission d'une cellule sortante, la zone de la mémoire MCO, qui correspond à la communication $i$ à laquelle appartient la cellule sortante, est adressée, à travers le multiplexeur MX1 commuté par l'entrée $S = t3+t4$, par l'étiquette Vcis de la cellule, qui est délivrée par la mémoire MT. L'état de ladite zone de la mémoire MCO est lu en t3 et ses signaux de sortie appliqués au circuit UAR qui délivre les signaux b1 à f2.

Il est important de noter qu'une case de la mémoire MT, donc une cellule, ne peut être lue que si le bit be qui est associé est à "1".

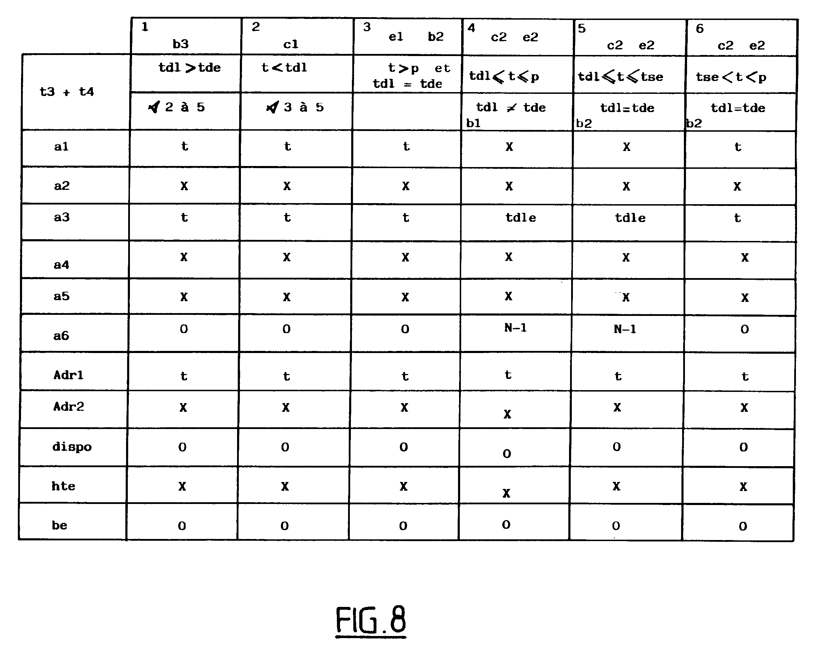

Les différentes cases indiquées dans le tableau de la Fig. 8 représentent les actions à entreprendre en fonction des événements définis par les signaux b1 à f2 (première ligne), associés aux conditions inscrites à la deuxième ligne. On rencontre donc les cas suivants:

1) b3 est à "1", quels que soient c1, e1, b2, c2 et e2. Ce cas correspond à un cas de faute, comme à l'arrivée d'une cellule entrante, et pour les mêmes raisons. On attribue aux heures tde et tdl la valeur de l'heure courante $t$ et on met $N$ à "0", be à "0", les autres champs pm, dm et NM de la case étant inchangés.

2) c1 est à "1", quels que soient e1 et b2, c2 et e2. Pour les mêmes raisons que lors de l'arrivée d'une cellule entrante, il s'agit d'un cas de faute et les actions prises sont les mêmes qu'en 1) ci-dessus.

3) e1 et b2 sont à "1".

Il s'agit d'un cas anormal. En effet, puisque l'heure tde est égale à l'heure tdl, il n'y a plus de cellule de la communication en attente à émettre. Or l'adressage de la mémoire MCO est effectué par l'étiquette Vcis de la cellule en cours de lecture dans la mémoire MT. De plus, l'heure $t$ supérieure à P indique que, depuis la dernière cellule émise, il s'est écoulé un peu plus d'un cycle de lecture de la mémoire tampon MT. Cela confirme que toutes les cellules auraient dû être lues. On effectue les mêmes actions qu'en 1) ci-dessus.

A noter que si e1 est à "1", mais b2 à "0", cela signifie que la dernière cellule entrante est arrivée très récemment. Il faut alors émettre comme ci-dessous en 4).

4) c2 et e2 sont à "1", et b1 à "1".

Il s'agit d'un cas normal de lecture cellule sortante pour émission. L'heure tdle délivrée par la mémoire MT est utilisée pour remettre à jour, par a3, l'ancienne valeur de l'heure tdl dans la zone correspondante de la mémoire MCO. Par ailleurs, par a6, le nombre $N$ est décrémenté puisque l'additionneur ADD3 du circuit UAR a fonctionné en soustracteur. Par le multiplexeur MX2, commandé par S, la mémoire MAD est adressée par l'heure courante $t$ et le fil be remet la case correspondante de la mémoire MAD à "0", ce qui signifie que cette case redevient libre. Enfin, le fil be remet aussi à "0" le bit correspondant de la mémoire MT. Les autres champs de la zone de la mémoire MCO restent inchangés.

5) c2 et e2 sont à "1" et b2 et f1 à "1".

Il s'agit d'un cas normal et on prend les mêmes actions qu'en 4) ci-dessus.

6) c2 et e2 sont à "1" et f2 et b2 à "1".

Il s'agit d'un cas de faute puisqu'on lit une cellule et qu'il n'y en a théoriquement plus. On prend donc les mêmes actions qu'en 1) ci-dessus.

Pour l'accès de l'unité centrale UC à la mémoire MCO, le multiplexeur MX1 est commuté par le signal $U = t5+t6$, et l'unité centrale UC délivre elle-même l'adresse UCa de la zone qu'elle va analyser. L'état de la zone sélectée est lu en t5 et ses signaux de sortie appliqués à l'unité UAR. En t6, on réécrit dans la zone les données résultant des calculs et des décisions logiques sortant de l'unité UDL. Dans le fonctionnement du système concerné par l'invention, l'unité UC n'intervient pas sur les mémoires MAD et MT.

L'accès de l'unité centrale UC à la mémoire MCO correspond à plusieurs fonctions: la mise à jour horaire et l'initialisation d'une communication.

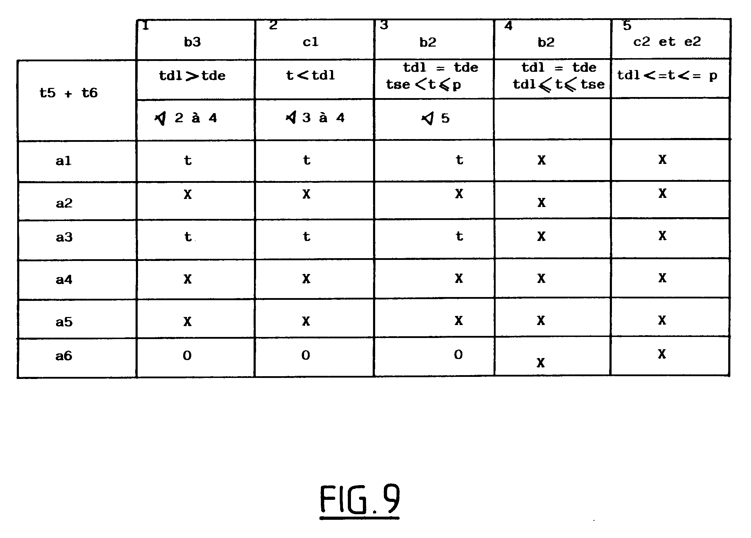

Les différentes cases indiquées dans le tableau de la Fig. 9 représentent les actions à entreprendre pour la mise à jour horaire en fonction des événements définis par les signaux b3, c1, b2 et c2 et e2 (première ligne), associés aux conditions inscrites à la deuxième ligne. On rencontre donc les cas suivants:

1) b3 est à "1", quel que soit l'état de c1, b2, c2 et e2.

Il s'agit d'un cas de faute car l'heure tdl ne peut dépasser l'heure tde. On écrit dans la zone concernée des valeurs de tde et de tdl égale à l'heure courante $t$, et on donne au nombre $N$ la valeur "0", les autres champs pm, dm et NM étant inchangés.

2) c1 est à "1", quel que soit l'état de b2 et c2 et e2. Il s'agit aussi d'un cas de faute et on prend les mêmes actions qu'en 1) ci-dessus.

3) b2 est à "1", quel que soit c2 et e2.

Il s'agit du cas normal de remise à l'heure avec aucune cellule en attente d'émission pour la communication considérée. En effet, la communication n'a pas été active pendant un certain temps et les valeurs horaires de tde et de tdl présentes dans la zone de la communication considérée sont dues soit à une activité précédente, soit à une précédente remise à l'heure par l'unité centrale UC. Les actions prises sont les mêmes qu'en 1) ci-dessus.

4) b2 et f2 sont à "1".

C'est un cas normal et aucun changement dans les champs de zone n'est entrepris.

5) c2 et e2 sont à "1".

C'est un cas normal et aucun changement dans les champs de la zone n'est entrepris.

Dans la seconde fonction, l'unité centrale UC intervient aussi dans la mémoire MCO, soit pour initialiser celle-ci, soit pour établir une nouvelle communication, soit pour une mise à jour. Dans ce cas l'adresse UCa comporte un bit d'adresse sup lémentaire de poids plus fort mis à "1" pour différencier cette fonction de celle d'une simple mise à jour horaire. Il en résulte qu'indépendamment des calculs et des décisions dans l'unité UAL, l'unité centrale UC accède aux fils de sortie a1 à a6 par l'intermédiaire de la liaison AM. Les six sections de la zone considérée sont ainsi positionnées directement. A noter que dans ce cas les heures $\underline{tde}$ et $\underline{tdl}$ prennent la valeur de l'heure courante $\underline{t}$.

La mise à jour de la mémoire MCO par l'unité centrale UC a lieu cycliquement. L'unité centrale explore toute la mémoire MCO au moins en un temps inférieur à T/2, où T correspond, comme on l'a déjà mentionné, à un cycle de la base de temps BT. Ansi, l'unité centrale UC maintient toutes les valeurs affectées à une communication à proximité de l'heure exacte $\underline{t}$ délivrée par la base de temps BT, de façon que toutes ces heures soient toujours distantes les unes des autres d'une valeur inférieure à T/2.

De cette façon, si le poids fort d'une quelconque des heures diffère, pour une communication, du poids fort d'une autre heure, c'est que l'ensemble de ces heures se trouvent au voisinage du passage de la base de temps BT à zéro. Il convient, dans ce cas, d'effectuer la comparaison des heures en rajoutant la valeur T/2 à toutes heures avant comparaison; elles se retrouveront au voisinage de T/2 et l'ordre chronologique sera respecté dans les comparaisons. C'est cette addition qui est effectuée ou non, par le circuit TVZ et les portes P3 à P7, Fig. 3.

Le système peut être simplifié en prenant une marge supérieure pour le calcul de la valeur $\underline{P}$. On peut n'effectuer des remises à jour que si N=0, lorsque $\underline{t}$ est supérieur à $\underline{tde}$. En effet, si N est différent de zéro, les remises à jour ont lieu en permanence puisque la communication est active.

Si $\underline{t}$ est inférieur à $\underline{tde}$, on tombe dans le cas de faute de non remise à 0 par l'unité centrale ou autres et les remises à jour s'imposent.

Cette simplification conduit à supprimer les champs $\underline{tdl}$ et $\underline{dm}$ dans la mémoire MCO et le champ $\underline{tdle}$ dans la mémoire MT. De plus la condition $\overline{tde} = \overline{tdl}$ est remplacée par la condition N = 0.

Si N =0, les pointeurs sont remis à jour dans tous les cas. De plus, en réception de cellule entrante, celle-ci est prise en compte et N prend la valeur N = 1. En réémission de cellule sortante ou mise à jour par l'unité centrale UC, N prend la valeur 0. Toutes les valeurs sont positionnées comme dans la colonne 1 des Figs. 7 à 9, sauf que le champ a3 n'existe pas.

Si N est différent de 0 et que $\underline{t}$ est supérieur à $\underline{tde}$, une cellule entrante est prise en compte avec la valeur (N+1) dans le champ a6. Une cellule sortante est prise en compte avec la valeur (N-1) dans le champ a6. La mise à jour par l'unité centrale ne modifie rien.

Si $\underline{t}$ est inférieur à $\underline{tde}$, il y a remise à l'heure.

A l'initialisation par l'unité centrale UC, les champs $\underline{tde}$, $\underline{pm}$, $\underline{tdl}$ et $\underline{dm}$ sont positionnés à 0, puis les zones correspondant aux circuits virtuels choisis pour véhiculer des communications sont progressivement initialisées, d'abord les chmaps $\underline{pm}$ et $\underline{dm}$, puis les champs $\underline{tde}$ et $\underline{tdl}$ par remise à l'heure.

A noter encore que si la mémoire tampon MT déborde, on aura une absence d'adresse libre dans la mémoire MAD et la cellule entrante sera rejetée.

## Revendications

**1.** Méthode de contrôle de flux de communications temporelles asynchrones formées de cellules portées par un multiplex temporel entrant (XE) pour délivrer un multiplex temporel asynchrone sortant (XS), chaque cellule entrante étant rangée dans une mémoire tampon (MT) à une adresse (Add) correspondant à son heure réelle de réémission (t) sur le multiplex temporel sortant (XS), caractérisée en ce que qu'elle consiste à comparer le nombre de cellules (N) d'une même communication qui sont mémorisées dans la mémoire tampon (MT) et qui n'ont pas été encore émises à l'heure d'arrivée d'une cellule entrante appartenant à ladite communication à un nombre maximal (NM) attribué à la communication et, dans le cas où le premier nombre dépasse le second, à ne pas prévoir de réémettre ladite cellule entrante.

**2.** Moyens de mise en oeuvre de la méthode suivant la revendication 1, pour contrôler le flux de communications temporelles asynchrones formées de cellules portées par un multiplex temporel entrant (XE) pour délivrer un multiplex temporel asynchrone sortant (XS), chaque cellule entrante étant rangée dans une mémoire tampon (MT) à une adresse (Add) correspondant à son heure réelle de réémission (t) sur le multiplex temporel sortant (XS), caractérisés en ce qu'ils comprennent, outre la mémoire tampon (MT), une mémoire d'état (MCO) et une unité arithmétique et logique (UAL), la mémoire d'état (MCO) étant divisée en zones, chaque zone correspondant biunivoquement à une communication transmise par le multiplex temporel asynchrone entrant (XE) et comprenant deux sections, une première section (N) dans laquelle est mémorisée le nombre de cellules de la communication qui sont mémorisées dans la mémoire tampon (MT) et qui n'ont pas été encore émises à l'heure d'arrivée de la cellule entrante de la même communication, et une seconde section (NM) dans laquelle est mémorisé le nombre maximal attribué à la communication, l'unité arithmétique et logique (UAL) effectuant la comparaison entre le premier nombre (N) et le second nombre (NM), et inhibant la réémission de la cellule entrante, quand le premier nombre dépasse le second.

## Claims

1. Method of monitoring the flow of asynchronous time division communications formed from cells carried by an incoming time division multiplex (XE) to deliver an outgoing time division multiplex (XS), each incoming cell being stored in a buffer (MT) at an address (ADD) corresponding to its real time of forwarding (t) on the outgoing time division multiplex (XS), characterised in that it consists in comparing the number of cells (N) of the same communication which are stored in the buffer (MT) and which have not yet been transmitted at the time of arrival of an incoming cell belonging to the said communication with a maximum number (NM) allocated to the communication and, in the case where the first number exceeds the second, not making provision to forward the said incoming cell.

2. Means of implementing the method according to claim 1, for monitoring the flow of asynchronous time division communications formed from cells carried by an incoming time division multiplex (XE) to deliver an outgoing asynchronous time division multiplex (XS), each incoming cell being stored in a buffer (MT) at an address (ADD) corresponding to its real time of forwarding (t) on the outgoing time division multiplex (XS), characterised in that said means comprise, besides the buffer (MT), a status memory (MCO) and an arithmetic and logic unit (ALU), the status memory (MCO) being divided into zones, each zone corresponding one-to-one to a communication transmitted by the incoming asynchronous time division multiplex (XE) and comprising two sections, a first section (N) in which is stored the number of cells of the communication which are stored in the buffer (MT) and which have not yet been transmitted at the time of arrival of the incoming cell of the same communication, and a second section (NM) in which is stored the maximum number allocated to the communication, the arithmetic and logic unit (ALU) making the comparison between the first number (N) and the second number (NM) and inhibiting the forwarding of the incoming cell, when the first number exceeds the second.

## Patentansprüche

1. Verfahren zur Überwachung der Ströme von asynchronen Zeitmultiplex-Kommunikationen, die aus Zellen bestehen, die von einem eingehenden Zeitmultiplex (XE) getragen werden, um einen abgehenden asynchronen Zeitmultiplex (XS) zu liefern, wobei jede eingehende Zelle in einem Pufferspeicher (MT) an einer Adresse (Add) angeordnet wird, die ihrer wirklichen Wiederaussendungszeit (t) auf dem abgehenden Zeitmultiplex (XS) entspricht, **dadurch gekennzeichnet**, daß es darin besteht, die Anzahl von Zellen (N) derselben Kommunikation, die im Pufferspeicher (MT) gespeichert sind und zur Ankunftszeit einer eingehenden Zelle, die zu dieser Kommunikation gehört, noch nicht ausgesendet worden waren, mit einer der Kommunikation zugeordneten maximalen Anzahl (NM) zu vergleichen und in dem Fall, in dem die erste Anzahl die zweite übersteigt, die Wiederaussendung der eingehenden Zelle nicht vorzusehen.

2. Mittel zur Durchführung des Verfahrens nach Anspruch 1 zum Überwachen des Stroms von asynchronen Zeitmultiplex-Kommunikationen, die aus Zellen bestehen, die von einem eingehenden Zeitmultiplex (XE) getragen werden, um einen abgehenden asynchronen Zeitmultiplex (XS) zu liefern, wobei jede eingehende Zelle in einem Pufferspeicher (MT) an einer Adresse (Add) angeordnet wird, die ihrer wirklichen Wiederaussendungszeit (t) auf dem abgehenden Zeitmultiplex (XS) entspricht, dadurch gekennzeichnet, daß sie außer dem Pufferspeicher (MT) einen Zustandsspeicher (MCO) und eine arithmetisch-logische Einheit (UAL) umfassen, wobei der Zustandsspeicher (MCO) in Bereiche unterteilt ist, wobei jeder Bereich eineindeutig einer vom eingehenden asynchronen Zeitmultiplex (XE) übertragenen Kommunikation entspricht und zwei Abschnitte umfaßt, einen ersten Abschnitt (N), in welchem die Anzahl von Zellen der Kommunikation gespeichert ist, die im Pufferspeicher (MT) gespeichert sind und die zur Ankunftszeit der eingehenden Zelle derselben Kommunikation noch nicht ausgesendet worden waren, und einen zweiten Abschnitt (NM), in welchem die der Kommunikation zugeordnete maximale Anzahl gespeichert ist, wobei die arithmetisch-logische Einheit (UAL) den Vergleich zwischen der ersten Anzahl (N) und der zweiten Anzahl (NM) durchführt und die Wiederaussendung der eingehenden Zelle hemmt, wenn die erste Anzahl die zweite übersteigt.

FIG.1

FIG. 2

FIG. 3

FIG.4

FIG.5

FIG.6

| t1 + t2 | 1 b3 | 2 c1 | 3 e1 et b2 | 4 d1 | 5 b2 et f2 | 6 b2 et f1 | 7 c2 et e2 |
|---|---|---|---|---|---|---|---|
| | $tdl > tde$ | $t < tdl$ | $t > p$ et $tdl=tde$ | $N+1 > NM$ | $tdl = tde$ $t > tse$ | $tdl = tde$ $tdl < t \leq tse$ | $tdl \leq t \leq p$ |
| | ✓ 2 à 6 | ✓ 3 à 6 | ✓ 4 à 6 | ✓ 5 à 6 | ✓ 6 | | |
| a1 | t | t | t | X | t | tse | tse |
| a2 | X | X | X | X | X | X | X |
| a3 | t-pm | t-pm | t-pm | X | t-pm | X | X |
| a4 | X | X | X | X | X | X | X |
| a5 | X | X | X | X | X | X | X |
| a6 | 1 | 1 | 1 | X | 1 | N+1 | N+1 |
| Adr1 | Add | Add | Add | X | Add | Add | Add |
| Adr2 | t | t | t | X | t | tse | tse |
| dispo | 1 | 1 | 1 | X | 1 | 1 | 1 |
| hte | t | t | t | X | t | tse | tse |
| be | 1 | 1 | 1 | X | 1 | 1 | 1 |

FIG.7

EP 0 478 008 B1

| t3 + t4 | 1<br>b3 | 2<br>c1 | 3<br>e1    b2 | 4    c2   e2 | 5<br>c2   e2 | 6<br>c2   e2 |
|---|---|---|---|---|---|---|
| | $tdl > tde$ | $t < tdl$ | $t > p$  et<br>$tdl = tde$ | $tdl \leqslant t \leqslant p$ | $tdl \leqslant t \leqslant tse$ | $tse < t < p$ |
| | ✓ 2 à 5 | ✓ 3 à 5 | | $tdl \neq tde$<br>b1 | $tdl = tde$<br>b2 | $tdl = tde$<br>b2 |
| a1 | t | t | t | X | X | t |
| a2 | X | X | X | X | X | X |
| a3 | t | t | t | tdle | tdle | t |
| a4 | X | X | X | X | X | X |
| a5 | X | X | X | X | X | X |
| a6 | 0 | 0 | 0 | N−1 | N−1 | 0 |
| Adr1 | t | t | t | t | t | t |
| Adr2 | X | X | X | X | X | X |
| dispo | 0 | 0 | 0 | 0 | 0 | 0 |
| hte | X | X | X | X | X | X |
| be | 0 | 0 | 0 | 0 | 0 | 0 |

FIG.8

EP 0 478 008 B1

| t5 + t6 | 1<br>b3<br>$tdl > tde$<br>◁ 2 à 4 | 2<br>c1<br>$t < tdl$<br>◁ 3 à 4 | 3<br>b2<br>$tdl = tde$<br>$tse < t \leqslant p$<br>◁ 5 | 4<br>b2<br>$tdl = tde$<br>$tdl \leqslant t \leqslant tse$ | 5<br>c2 et e2<br>$tdl <= t <= p$ |
|---|---|---|---|---|---|
| a1 | t | t | t | X | X |
| a2 | X | X | X | X | X |
| a3 | t | t | t | X | X |
| a4 | X | X | X | X | X |
| a5 | X | X | X | X | X |
| a6 | 0 | 0 | 0 | X | X |

<u>FIG.9</u>